# EUROPÄISCHE PATENTANMELDUNG

(11) **EP 4 053 593 A1**
(43) Veröffentlichungstag der Anmeldung: **07.09.2022**
(21) Anmeldenummer: 21160378.2
(22) Anmeldetag: 03.03.2021
(51) Int. Cl.: G01S 13/86, G01S 13/931, G01S 15/86, G01S 15/931, G01S 17/86, G01S 17/931, G01S 7/41

(54) **VERARBEITUNG VON SENSORDATEN IN EINEM FORTBEWEGUNGSMITTEL**

(71) Anmelder: Elektrobit Automotive GmbH, 91058 Erlangen (DE)
(72) Erfinder: Hermann, Stefan, 60488 Frankfurt am Main (DE)
(74) Vertreter: Continental Corporation

(57) **Zusammenfassung**

Die vorliegende Erfindung betrifft ein Verfahren, ein Computerprogramm mit Instruktionen und eine Vorrichtung zum Verarbeiten von Sensordaten in einem Fortbewegungsmittel. In einem ersten Schritt werden erste Sensordaten eines ersten Sensors empfangen (S1). Zudem werden zweite Sensordaten eines zweiten Sensors empfangen (S2). Die ersten Sensordaten und die zweiten Sensordaten werden zu fusionierten Daten fusioniert (S3). Die fusionierten Daten werden schließlich durch einen Algorithmus verarbeitet (S4). Dabei werden die zweiten Sensordaten zum Teil auf Grundlage der ersten Sensordaten von der Verarbeitung (S4) ausgenommen.

## Beschreibung

Die vorliegende Erfindung betrifft ein Verfahren, ein Computerprogramm mit Instruktionen und eine Vorrichtung zum Verarbeiten von Sensordaten in einem Fortbewegungsmittel.

Die Anzahl von Unfällen im Straßenverkehr kann durch die Verwendung von Fahrerassistenzsystemen deutlich reduziert werden. Fahrerassistenzsysteme können dazu die Kontrolle übernehmen, wenn gefährliche Situationen auftreten. Erste Versuche, das Autofahren sicherer zu machen, waren einfache Assistenzsysteme, wie z. B. Bremsassistenten. Inzwischen geht die Entwicklung hin zu vollständig autonomen Fahrzeugen. Ziel dieser Entwicklung ist es, Unfälle auf ein Minimum zu reduzieren.

Beispielsweise beschreibt DE 10 2013 113 054 A1 eine Zielerfassungsvorrichtung zum Vermeiden einer Kollision zwischen einem Fahrzeug und einem von Sensoren des Fahrzeugs erfassten Ziel. Die Zielerfassungsvorrichtung weist einen Radarsensor, einen bildgebenden Sensor und ein Steuergerät auf. Das durch den Radarsensor erfasste Ziel wird unter gewissen Bedingungen ausgewählt und extern ausgegeben. Die Bedingungen werden weniger restriktiv gehandhabt, wenn bei Durchführung einer Bildanalyse aus einem durch den bildgebenden Sensor erfassten Bild ein vorbestimmtes Muster bzw. Schemata eines Ziels erfasst wird.

Neben der erhöhten Sicherheit können Fahrerassistenzsysteme auch zur Steigerung des Komforts eingesetzt werden, indem dem Fahrer ein Teil der Fahraufgaben abgenommen wird. Beispiele für derartige Fahrerassistenzsysteme sind Spurhalteassistenten und eine adaptive Geschwindigkeitsregelung. Andere Fahrerassistenzsysteme können zur Verringerung des Kraftstoffverbrauchs beitragen, indem sie Beschleunigungs- und Bremsmanöver vorausplanen. Künftig könnten vollständig autonome Fahrzeuge auch die Steuerung des Verkehrsflusses durch entsprechende Systeme zur Reduzierung von Staus ermöglichen.

Um Systeme zu realisieren, die in der Lage sind, Entscheidungen zu treffen, muss eine umfassende Sicht auf die Umwelt modelliert werden. Die zunehmende Komplexität solcher Assistenzsysteme erfordert immer genauere Modelle. Daher werden Echtzeitdaten von verschiedenen Arten von Sensoren, die im Fahrzeug integriert sind, zu einer umfassenden konsistenten Darstellung der Umgebung genutzt.

In diesem Zusammenhang beschreibt DE 10 2016 104 463 A1 ein Verfahren zum Erzeugen eines synthetischen Bildes, das eine Umgebung eines Fahrzeugs darstellt. Bei dem Verfahren wird ein erstes Bild aus Infrarotinformation von einer Infrarot-Kamera erzeugt. Ein zweites Bild wird aus Laser-Punktwolken-Daten von einem LIDAR erzeugt. Basierend auf einer Kombination des ersten Bildes und des zweiten Bildes wird eine eingebettete Punktwolke erzeugt, die die Umgebung darstellt.

In zunehmenden Maße werden für die Verarbeitung der Sensordaten Algorithmen der künstlichen Intelligenz eingesetzt. Beispielsweise beschreibt DE 10 2013 113 054 A1 ein Verfahren zum Erkennen von Fahrzeugen in schlechten Lichtverhältnissen. Bei dem Verfahren werden Kameras benutzt, um RGB-Bilder aus der Umgebung eines Fahrzeugs zu erhalten. Die RGB-Bilder werden in LAB-Bilder konvertiert. Der "A"-Kanal wird gefiltert, um Konturen aus den LAB-Bildern zu extrahieren. Die Konturen werden basierend auf ihren Formen/Größen gefiltert, um zur Reduktion falscher Positiver von Konturen beizutragen, bei denen es unwahrscheinlich ist, dass sie Fahrzeugen entsprechen. Ein neuronales Netz klassifiziert ein Objekt basierend auf den Konturen als ein Fahrzeug oder Nichtfahrzeug.

Allerdings nimmt die Robustheit von Algorithmen der künstlichen Intelligenz, d. h. die Sicherheit und die Funktionsfähigkeit, mit ihrer Komplexität drastisch ab, d. h. mit der Komplexität ihrer Funktionen. Dies ist insbesondere bei neuronalen Netzen der Fall. So kann es beispielsweise zu Problemen führen, wenn sich viele Objekte vor einem komplexen Hintergrund befinden. Wird z. B. eine Objekterkennung auf Basis von Videodaten und Radardaten durchgeführt, so können die verwendeten Algorithmen sehr unterschiedliche Ergebnisse liefern. Unter Umständen widerspricht das Ergebnis der Videoauswertung mittels künstlicher Intelligenz sogar dem Ergebnis der Auswertung der Radardaten mit einem linearem Algorithmus.

Es ist Aufgabe der vorliegenden Erfindung, Lösungen für eine verbesserte Verarbeitung von Sensordaten in einem Fortbewegungsmittel bereitzustellen.

Diese Aufgabe wird durch ein Verfahren mit den Merkmalen des Anspruchs 1, durch ein Computerprogramm mit Instruktionen mit den Merkmalen des Anspruchs 9 und durch eine Vorrichtung mit den Merkmalen des Anspruchs 10 gelöst. Bevorzugte Ausgestaltungen der Erfindung sind Gegenstand der abhängigen Ansprüche.

Gemäß einem ersten Aspekt der Erfindung umfasst ein Verfahren zum Verarbeiten von Sensordaten in einem Fortbewegungsmittel die Schritte:
- Empfangen von ersten Sensordaten eines ersten Sensors;
- Empfangen von zweiten Sensordaten eines zweiten Sensors;
- Fusionieren der ersten Sensordaten und der zweiten Sensordaten zu fusionierten Daten; und
- Verarbeiten der fusionierten Daten durch einen Algorithmus, wobei die zweiten Sensordaten zum Teil auf Grundlage der ersten Sensordaten von der Verarbeitung ausgenommen werden.

Gemäß einem weiteren Aspekt der Erfindung umfasst ein Computerprogramm Instruktionen, die bei Ausführung durch einen Computer den Computer zur Ausführung der folgenden Schritte zum Verarbeiten von Sensordaten in einem Fortbewegungsmittel veranlassen:
- Empfangen von ersten Sensordaten eines ersten Sensors;
- Empfangen von zweiten Sensordaten eines zweiten Sensors;
- Fusionieren der ersten Sensordaten und der zweiten Sensordaten zu fusionierten Daten; und
- Verarbeiten der fusionierten Daten durch einen Algorithmus, wobei die zweiten Sensordaten zum Teil auf Grundlage der ersten Sensordaten von der Verarbeitung ausgenommen werden.

Der Begriff Computer ist dabei breit zu verstehen. Insbesondere umfasst er auch Steuergeräte, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist ein Modul zum Verarbeiten von Sensordaten in einem Fortbewegungsmittel auf:
- ein Empfangsmodul zum Empfangen von ersten Sensordaten eines ersten Sensors und zum Empfangen von zweiten Sensordaten eines zweiten Sensors;
- ein Fusionsmodul zum Fusionieren der ersten Sensordaten und der zweiten Sensordaten zu fusionierten Daten; und
- ein Verarbeitungsmodul zum Verarbeiten der fusionierten Daten mittels eines Algorithmus, wobei die zweiten Sensordaten zum Teil auf Grundlage der ersten Sensordaten von der Verarbeitung ausgenommen werden.

Die erfindungsgemäße Lösung macht sich den Umstand zunutze, dass oftmals ein Teil der erfassten Sensordaten für die vorzunehmende Verarbeitung nicht relevant ist. Bei der erfindungsgemäßen Lösung werden daher die Sensordaten eines zweiten Sensors teilweise von der Verarbeitung ausgenommen. Dies führt dazu, dass die Komplexität der zu verarbeitenden Sensordaten abnimmt, was wiederum die Robustheit der Verarbeitung erhöht. Welche Sensordaten konkret von der Verarbeitung ausgenommen werden, wird dabei auf Grundlage von Sensordaten eines ersten Sensors entschieden.

Gemäß einem Aspekt der Erfindung werden die zweiten Sensordaten bereits beim Fusionieren der ersten Sensordaten und der zweiten Sensordaten zum Teil aus den fusionierten Daten ausgenommen. Auf diese Weise ist sind die Sensordaten, die von der Verarbeitung ausgenommen werden sollen, bereits nicht mehr in den fusionierten Daten enthalten. Dies sorgt dafür, dass bei der Verarbeitung der fusionierten Daten keine diesbezügliche Prüfung erforderlich ist. Alternativ besteht die Möglichkeit, die Entscheidung darüber, welche Sensordaten von der Verarbeitung ausgenommen werden sollen, erst bei der Verarbeitung der fusionierten Daten zu treffen. In diesem Fall umfassen die fusionierten Daten die vollständigen ersten und zweiten Sensordaten.

Gemäß einem Aspekt der Erfindung werden die ersten Sensordaten und die zweiten Sensordaten für eine Objekterkennung verwendet. Die Erkennung von Objekten ist insbesondere im Automobilbereich von hoher Relevanz, z. B. für die Vermeidung von Kollision oder für die Planung von Fahrmanövern. Eine Steigerung der Robustheit der für diese Zwecke verwendeten Algorithmen ist daher von großer Bedeutung.

Gemäß einem Aspekt der Erfindung werden Bereiche der zweiten Sensordaten, in denen auf Grundlage der ersten Sensordaten keine relevanten Objekte erkannt wurden, von der Verarbeitung ausgenommen. Im Umfeld eines Fortbewegungsmittels können sich gegebenenfalls viele Objekte vor einem komplexen Hintergrund befinden. Allerdings sind regelmäßig nur wenige dieser Objekte für den konkreten Zweck der Verarbeitung relevant, z. B. Straßenschilder. Durch das Entfernen aller nicht relevanten Details aus den zu verarbeitenden Daten kann die Robustheit und Reaktionszeit des verarbeitenden Algorithmus erhöht werden.

Gemäß einem Aspekt der Erfindung ist der erste Sensor ein aktiver Fernerkundungssensor, beispielsweise ein Radarsensor, ein Lidarsensor oder ein Sonarsensor. Der zweite Sensor ist bevorzugt ein bildgebender Sensor, beispielsweise eine Kamera oder eine Stereokamera. Algorithmen zur Objekterkennung, die auf Radar, Lidar oder Sonar basieren, sind lineare Algorithmen und sehr robust. Allerdings können sie nicht gut zwischen Fahrzeugen und anderen metallischen Objekten oder Menschen und Tieren unterscheiden. Algorithmen, die auf Kamerabildern basieren, d. h. auf 2D-Bilddaten oder 3D-Bilddaten, können diese Unterscheidung vornehmen, aber das Ergebnis ist weniger robust. Bei der erfindungsgemäßen Lösung wird der Bereich, der durch robuste Algorithmen ausgewertet und als nicht relevant angesehen wird, aus dem Videobild entfernt und nur der verbleibende Bereich wird durch den weniger robusten Algorithmus für die Bildverarbeitung ausgewertet. Der Algorithmus für die Bildverarbeitung wird somit nicht unnötig durch nicht relevante Objekte oder den Hintergrund belastet. Die durch die Verarbeitung der Sensordaten des Fernerkundungssensors erkannten Objekte können durch den Algorithmus zur Verarbeitung der Sensordaten des bildgebenden Sensors validiert und klassifiziert werden. Im Ergebnis führt dies zu einer sehr robusten Objektklassifizierung.

Gemäß einem Aspekt der Erfindung ist der Algorithmus ein Algorithmus der künstlichen Intelligenz. Derartige Algorithmen, die z. B. neuronale Netze nutzen, sind besonders gut für die Verarbeitung von Bilddaten geeignet, sodass sie insbesondere im Automobilbereich zunehmend Anwendung finden.

Vorzugsweise wird ein erfindungsgemäßes Verfahren oder eine erfindungsgemäße Vorrichtung in einem Fortbewegungsmittel eingesetzt, z. B. in einem Kraftfahrzeug. Bei dem Fortbewegungsmittel kann es sich aber auch um ein bemanntes oder unbemanntes Fluggerät handeln, z. B. eine Drohne oder ein Flugtaxi, etc.

Weitere Merkmale der vorliegenden Erfindung werden aus der nachfolgenden Beschreibung und den angehängten Ansprüchen in Verbindung mit den Figuren ersichtlich.

### Figurenübersicht

Fig. 1 zeigt schematisch ein Verfahren zum Verarbeiten von Sensordaten in einem Fortbewegungsmittel;
Fig. 2 zeigt schematisch eine erste Ausführungsform einer Vorrichtung zum Verarbeiten von Sensordaten in einem Fortbewegungsmittel;
Fig. 3 zeigt schematisch eine zweite Ausführungsform einer Vorrichtung zum Verarbeiten von Sensordaten in einem Fortbewegungsmittel;
Fig. 4 zeigt schematisch ein Fortbewegungsmittel, in dem eine erfindungsgemäße Lösung realisiert ist;
Fig. 5 veranschaulicht eine Objekterkennung gemäß dem Stand der Technik anhand von Radardaten und Bilddaten; und
Fig. 6 veranschaulicht eine erfindungsgemäße Objekterkennung anhand von Radardaten und Bilddaten.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

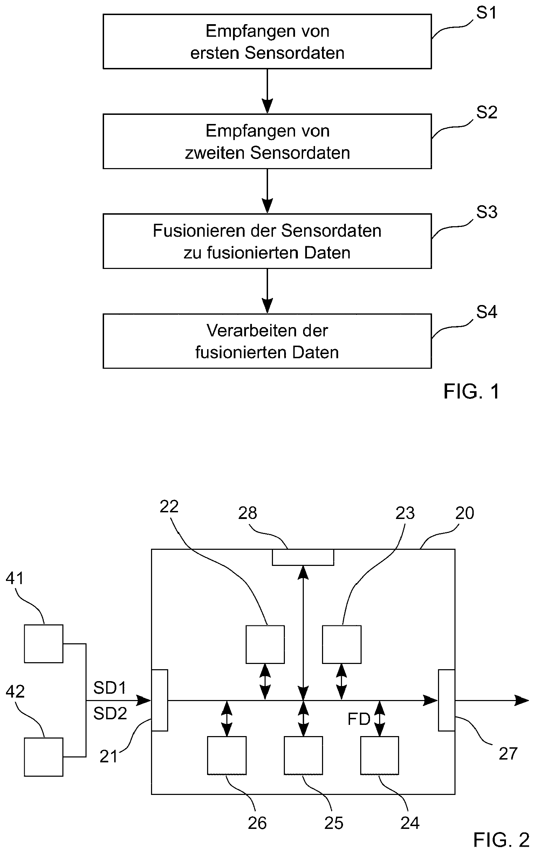

Fig. 1 zeigt schematisch ein Verfahren zum Verarbeiten von Sensordaten in einem Fortbewegungsmittel. In einem ersten Schritt werden erste Sensordaten eines ersten Sensors empfangen S1. Zudem werden zweite Sensordaten eines zweiten Sensors empfangen S2. Beispielsweise kann der erste Sensor ein aktiver Fernerkundungssensor sein, z. B. ein Radarsensor, ein Lidarsensor oder ein Sonarsensor. Der zweite Sensor ist vorzugsweise ein bildgebender Sensor, z. B. eine Kamera oder eine Stereokamera. Die zweiten Sensordaten sind in diesem Fall 2D-Bilddaten oder 3D-Bilddaten. Die ersten Sensordaten und die zweiten Sensordaten werden zu fusionierten Daten fusioniert S3. Die fusionierten Daten werden schließlich durch einen Algorithmus verarbeitet S4, der insbesondere ein Algorithmus der künstlichen Intelligenz sein kann. Dabei werden die zweiten Sensordaten zum Teil auf Grundlage der ersten Sensordaten von der Verarbeitung S4 ausgenommen. Dies erfolgt vorzugsweise bereits beim Fusionieren der ersten Sensordaten und der zweiten Sensordaten. Beispielsweise können die ersten Sensordaten und die zweiten Sensordaten für eine Objekterkennung verwendet werden. In diesem Fall werden Bereiche der zweiten Sensordaten, in denen auf Grundlage der ersten Sensordaten keine relevanten Objekte erkannt wurden, von der Verarbeitung S4 ausgenommen.

Fig. 2 zeigt eine vereinfachte schematische Darstellung einer ersten Ausführungsform einer Vorrichtung 20 zum Verarbeiten von Sensordaten SD1, SD2 in einem Fortbewegungsmittel. Die Vorrichtung 20 hat einen Eingang 21, über den ein Empfangsmodul 22 erste Sensordaten SD1 eines ersten Sensors 41 und zweite Sensordaten SD2 eines zweiten Sensors 42 empfängt. Beispielsweise kann der erste Sensor 41 ein aktiver Fernerkundungssensor sein, z. B. ein Radarsensor, ein Lidarsensor oder ein Sonarsensor. Der zweite Sensor 42 ist vorzugsweise ein bildgebender Sensor, z. B. eine Kamera oder eine Stereokamera. Die zweiten Sensordaten SD2 sind in diesem Fall 2D-Bilddaten oder 3D-Bilddaten. Ein Fusionsmodul 23 ist dazu eingerichtet, die ersten Sensordaten SD1 und die zweiten Sensordaten SD2 zu fusionierten Daten FD zu fusionieren. Ein Verarbeitungsmodul 24 ist dazu eingerichtet, die fusionierten Daten FD mittels eines Algorithmus zu verarbeiten, der insbesondere ein Algorithmus der künstlichen Intelligenz sein kann. Dabei werden die zweiten Sensordaten SD2 zum Teil auf Grundlage der ersten Sensordaten SD1 von der Verarbeitung ausgenommen. Dies erfolgt vorzugsweise bereits beim Fusionieren der ersten Sensordaten SD1 und der zweiten Sensordaten SD2. Beispielsweise können die ersten Sensordaten SD1 und die zweiten Sensordaten SD2 für eine Objekterkennung verwendet werden. In diesem Fall werden Bereiche der zweiten Sensordaten SD2, in denen auf Grundlage der ersten Sensordaten SD1 keine relevanten Objekte erkannt wurden, von der Verarbeitung ausgenommen. Ergebnisse der Verarbeitung können über einen Ausgang 27 der Vorrichtung 20 ausgegeben werden, z. B. an ein Netzwerk eines Fortbewegungsmittels. In Fig. 2 ist das Verarbeitungsmodul 24 Bestandteil der Vorrichtung 20. Es kann aber auch eine eigenständige Komponente sein oder Bestandteil einer anderen Komponente sein, z. B. eines Assistenzsystems. In diesem Fall werden die fusionierten Daten FD über den Ausgang 27 der Vorrichtung 20 bereitgestellt.

Das Empfangsmodul 22, das Fusionsmodul 23 und das Verarbeitungsmodul 24 können von einem Kontrollmodul 25 gesteuert werden. Über eine Benutzerschnittstelle 28 können gegebenenfalls Einstellungen des Empfangsmoduls 22, des Fusionsmoduls 23, des Verarbeitungsmoduls 24 oder des Kontrollmoduls 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Das Empfangsmodul 22, das Fusionsmodul 23, das Verarbeitungsmodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte Schnittstelle implementiert sein.

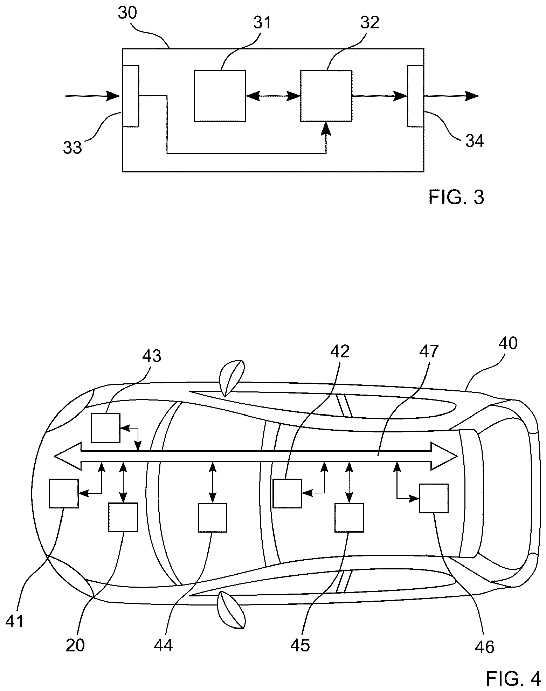

Fig. 3 zeigt eine vereinfachte schematische Darstellung einer zweiten Ausführungsform einer Vorrichtung 30 zum Verarbeiten von Sensordaten in einem Fortbewegungsmittel. Die Vorrichtung 30 weist einen Prozessor 32 und einen Speicher 31 auf. Beispielsweise handelt es sich bei der Vorrichtung 30 um ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen von einer Komponente eines Steuerungssystems. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Fortbewegungsmittel 40, in dem eine erfindungsgemäße Lösung realisiert ist. Bei dem Fortbewegungsmittel 40 handelt es sich in diesem Beispiel um ein Kraftfahrzeug. Das Kraftfahrzeug zumindest einen ersten Sensor 41 und einen zweiten Sensor 42 auf. Beispielsweise kann der erste Sensor 41 ein bildgebender Sensor sein, z. B. eine Kamera oder eine Stereokamera. Die ersten Sensordaten SD1 sind in diesem Fall 2D-Bilddaten oder 3D-Bilddaten. Der zweite Sensor 42 ist vorzugsweise ein aktiver Fernerkundungssensor, z. B. ein Radarsensor, ein Lidarsensor oder ein Sonarsensor. Zudem weist das Kraftfahrzeug zumindest ein Assistenzsystem 43 auf, das einen Bediener des Kraftfahrzeugs im Fahrbetrieb unterstützt. Eine Vorrichtung 20 zum Verarbeiten von Sensordaten verarbeitet die Sensordaten des ersten Sensors 41 und des zweiten Sensors 42 und stellt dem Assistenzsystem 43 die Ergebnisse der Verarbeitung zur Verfügung. Die Vorrichtung 20 kann natürlich auch in das Assistenzsystem 43 integriert sein. Weitere Bestandteile des Kraftfahrzeugs sind in diesem Beispiel ein Navigationssystem 44, sowie eine Datenübertragungseinheit 45. Mittels der Datenübertragungseinheit 45 kann eine Verbindung zu einem Backend aufgebaut werden, z. B. um aktualisierte Software für die Komponenten des Kraftfahrzeugs zu beziehen. Zur Speicherung von Daten ist ein Speicher 46 vorhanden. Der Datenaustausch zwischen den verschiedenen Komponenten des Kraftfahrzeugs erfolgt über ein Netzwerk 47.

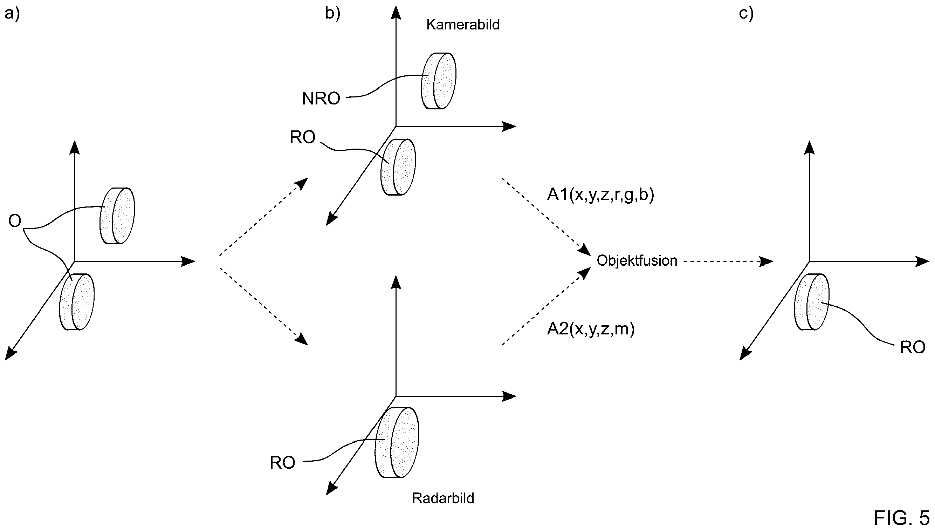

Fig. 5 veranschaulicht eine Objekterkennung gemäß dem Stand der Technik anhand von Radardaten und Bilddaten. Ausgangssituation ist die in Fig. 5a) dargestellte reale Szene. Die gestrichelten Pfeile veranschaulichen den Datenfluss.

Zu sehen sind zwei Objekte O. Die beiden Objekte O werden sowohl mit einer Stereokamera als auch mit einem Radarsensor erfasst. Das entsprechende Kamerabild ist Fig. 5b) oben dargestellt, das Radarbild in Fig. 5b) unten. Die Pixel des Kamerabildes werden durch die 3D-Positionsdaten (x,y,z) und die Intensität der Farbe (r,g,b) charakterisiert. Die Pixel des Radarbildes werden durch die 3D-Positionsdaten (x,y,z) und die Intensität (m) des reflektierten Signals charakterisiert. Im Radarbild ist nur eines der Objekte O erkennbar. Es handelt sich dabei um ein relevantes Objekt RO. Das andere Objekt O ist nicht zu sehen, z. B. weil die Intensität des reflektierten Signals zu gering ist, und ist daher ein nicht relevantes Objekt NRO. Gemäß dem Stand der Technik wird auf das Kamerabild ein erster Algorithmus A1(x,y,z,r,g,b) angewandt, auf das Radarbild ein zweiter Algorithmus A2(x,y,z,m). Die Ausgaben der beiden Algorithmen, d.h. die erkannten Objekte, werden dann fusioniert. Im Ergebnis liefert die Objekterkennung das relevante Objekt RO, das von beiden Algorithmen erkannt wurde. Dies ist in Fig. 5c) dargestellt. Nachteilig ist, dass zwei Algorithmen erforderlich sind, von denen die Bildverarbeitung wenig robust gegenüber komplexen Eingangsbildern ist.

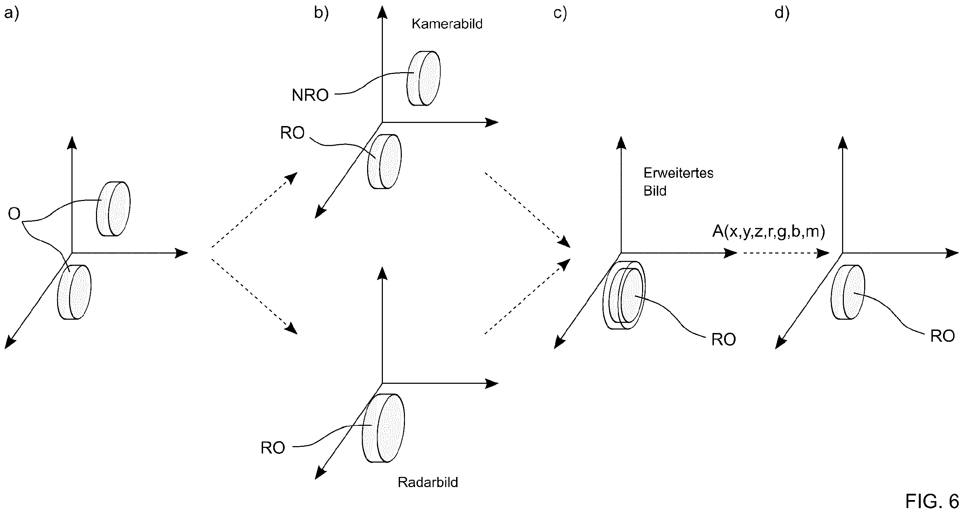

Fig. 6 veranschaulicht eine erfindungsgemäße Objekterkennung anhand von Radardaten und Bilddaten. Ausgangssituation ist die in Fig. 6a) dargestellte reale Szene mit den beiden Objekten O. Die gestrichelten Pfeile veranschaulichen den Datenfluss. Die Objekte O werden wie zuvor mit einer Stereokamera und mit einem Radarsensor erfasst. Das entsprechende Kamerabild ist Fig. 6b) oben dargestellt, das Radarbild in Fig. 6b) unten. Die Pixel des Kamerabildes werden durch die 3D-Positionsdaten (x,y,z) und die Intensität der Farbe (r,g,b) charakterisiert. Die Pixel des Radarbildes werden durch die 3D-Positionsdaten (x,y,z) und die Intensität (m) des reflektierten Signals charakterisiert. Erfindungsgemäß werden das Kamerabild und das Radarbild zunächst zu einem erweiterten Bild EB(x,y,z,r,g,b,m) fusioniert. Dieses ist in Fig. 6c) dargestellt und beinhaltet nur noch das relevante Objekt RO. Auf das erweiterte Bild wird nun ein einziger Algorithmus A(x,y,z,r,g,b,m) angewandt, der eine geringere Komplexität und eine höhere Robustheit aufweist. Im Ergebnis liefert die Objekterkennung wiederum, wie in Fig. 6d) dargestellt, das relevante Objekt RO.

## Patentansprüche

1. Verfahren zum Verarbeiten von Sensordaten (SD1, SD2) in einem Fortbewegungsmittel (40), mit den Schritten:
- Empfangen (S1) von ersten Sensordaten (SD1) eines ersten Sensors (41);
- Empfangen (S2) von zweiten Sensordaten (SD2) eines zweiten Sensors (42);
- Fusionieren (S3) der ersten Sensordaten (SD1) und der zweiten Sensordaten (SD2) zu fusionierten Daten (FD); und
- Verarbeiten (S4) der fusionierten Daten (FD) durch einen Algorithmus, wobei die zweiten Sensordaten (SD2) zum Teil auf Grundlage der ersten Sensordaten (SD1) von der Verarbeitung (S4) ausgenommen werden.

2. Verfahren gemäß Anspruch 1, wobei die zweiten Sensordaten (SD2) bereits beim Fusionieren der ersten Sensordaten (SD1) und der zweiten Sensordaten (SD2) zum Teil aus den fusionierten Daten (FD) ausgenommen werden.

3. Verfahren gemäß Anspruch 1 oder 2, wobei die ersten Sensordaten (SD1) und die zweiten Sensordaten (SD2) für eine Objekterkennung verwendet werden.

4. Verfahren gemäß Anspruch 3, wobei Bereiche der zweiten Sensordaten (SD2), in denen auf Grundlage der ersten Sensordaten (SD1) keine relevanten Objekte (RO) erkannt wurden, von der Verarbeitung (S4) ausgenommen werden.

5. Verfahren gemäß einem der vorherigen Ansprüche, wobei der erste Sensor (41) ein aktiver Fernerkundungssensor ist und der zweite Sensor (42) ein bildgebender Sensor ist.

6. Verfahren gemäß Anspruch 5, wobei die zweiten Sensordaten (SD2) 2D-Bilddaten oder 3D-Bilddaten sind.

7. Verfahren gemäß Anspruch 5 oder 6, wobei der erste Sensor (41) ein Radarsensor, ein Lidarsensor oder ein Sonarsensor ist und der zweite Sensor (42) eine Kamera oder eine Stereokamera ist.

8. Verfahren gemäß einem der vorherigen Ansprüche, wobei der Algorithmus ein Algorithmus der künstlichen Intelligenz ist.

9. Computerprogramm mit Instruktionen, die bei Ausführung durch einen Computer den Computer zur Ausführung der Schritte eines Verfahrens gemäß einem der Ansprüche 1 bis 8 zum Verarbeiten von Sensordaten (SD1, SD2) in einem Fortbewegungsmittel (40) veranlassen.

10. Vorrichtung (20) zum Verarbeiten von Sensordaten (SD1, SD2) in einem Fortbewegungsmittel (40), mit:
- einem Empfangsmodul (22) zum Empfangen (S1) von ersten Sensordaten (SD1) eines ersten Sensors (41) und zum Empfangen (S2) von zweiten Sensordaten (SD2) eines zweiten Sensors (42);
- einem Fusionsmodul (23) zum Fusionieren (S3) der ersten Sensordaten (SD1) und der zweiten Sensordaten (SD2) zu fusionierten Daten (FD); und
- einem Verarbeitungsmodul (24) zum Verarbeiten (S4) der fusionierten Daten (FD) mittels eines Algorithmus, wobei die zweiten Sensordaten (SD2) zum Teil auf Grundlage der ersten Sensordaten (SD1) von der Verarbeitung (S4) ausgenommen werden.
